(19) Europäisches Patentamt
European Patent Office
Office européen des brevets

(11) Veröffentlichungsnummer: **0 302 401**
**A1**

# (12) EUROPÄISCHE PATENTANMELDUNG

(21) Anmeldenummer: **88112279.0**

(51) Int. Cl.4: **C09B 29/42 , D06P 1/18**

(22) Anmeldetag: **29.07.88**

Patentansprüche für folgenden Vertragsstaat: ES.

(30) Priorität: **07.08.87 DE 3726301**

(43) Veröffentlichungstag der Anmeldung:
**08.02.89 Patentblatt 89/06**

(84) Benannte Vertragsstaaten:
**CH DE ES FR GB IT LI**

(71) Anmelder: **CASSELLA Aktiengesellschaft**
**Hanauer Landstrasse 526**
**D-6000 Frankfurt am Main 61(DE)**

(72) Erfinder: **Tappe, Horst, Dr. Dipl.-Ing.**
**Ringstrasse 9**
**D-6057 Dietzenbach(DE)**
Erfinder: **Ritter, Josef, Dr. Dipl.-Chem.**
**Berliner Strasse 12**
**D-6238 Hofheim(DE)**
Erfinder: **Sarcevic, Vladimir, Dipl.-Ing.**
**Drosselweg 3**
**D-6230 Frankfurt am Main 80(DE)**

(74) Vertreter: **Urbach, Hans-Georg, Dr. et al**
**Hanauer Landstrasse 526**
**D-6000 Frankfurt am Main 61(DE)**

## (54) Pyridonfarbstoffe, Verfahren zu ihrer Herstellung und Verwendung.

(57) Neue Pyridonfarbstoffe der allgemeinen Formel I

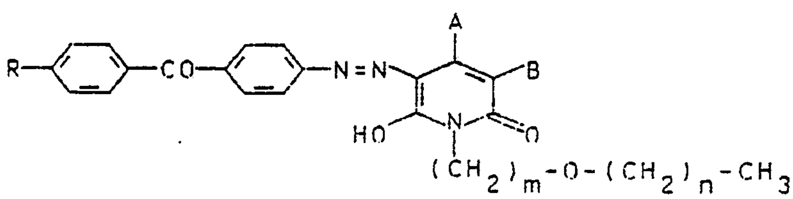

(I)

worin
m 2, 3 oder 4
n 1, 2, 3, 4 oder 5,
R ein geradkettiges oder verzweigtes Alkyl mit 1 bis 6 C-Atomen,
A Wasserstoff, Alkyl mit 1 bis 6 C-Atomen oder Phenyl und
B Wasserstoff, Cyan oder Aminocarbonyl
bedeuten, die in unpolaren Medien farbstarke, gelbe Färbungen mit sehr guten Echtheiten liefern.

EP 0 302 401 A1

## Pyridonfarbstoffe, Verfahren zu ihrer Herstellung und Verwendung

Die vorliegende Erfindung betrifft Pyridonfarbstoffe der allgemeinen Formel I

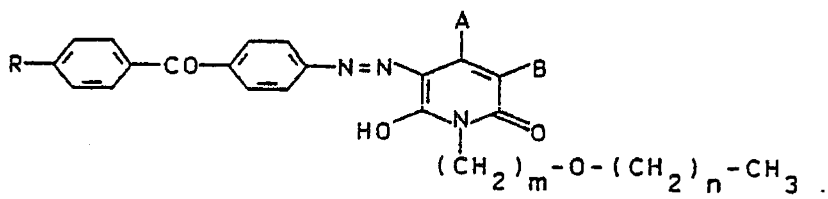

(I)

worin
m 2, 3 oder 4,
n 1, 2, 3, 4 oder 5,
R ein geradkettiges oder verzweigtes Alkyl mit 1 bis 6 C-Atomen,
A Wasserstoff, Alkyl mit 1 bis 6 C-Atomen oder Phenyl und
B Wasserstoff, Cyan oder Aminocarbonyl bedeutet.

Die Erfindung betrifft außerdem ein Verfahren zur Herstellung der Farbstoffe der allgemeinen Formel I sowie ihre Verwendung zum Färben und Bedrucken von unpolaren Medien und als Farbmittel für verschiedene Thermodruckverfahren.

Die Farbstoffe der allgemeinen Formel I liefern in den genannten Medien farbstarke, gelbe Färbungen mit sehr guten Licht-und Wetterechtheiten und sehr guter Temperaturbeständigkeit. Aufgrund ihrer guten Löslichkeit sind auch tiefe Färbungen zu erzielen.

Aus der Literatur sind eine Vielzahl von Pyridonfarbstoffen bekannt und als Handelsprodukte am Markt. Diese werden hauptsächlich zum Färben von Polyester-Fasermaterial eingesetzt, besitzen in unpolaren Medien jedoch nur eine sehr beschränkte Löslichkeit und Temperaturbeständigkeit.

Überraschenderweise wurde nun gefunden, daß die erfindungsgemäßen Farbstoffe diese Nachteile nicht aufweisen und sich insbesondere gerade zum Färben der genannten unpolaren Medien hervorragend eignen.

In der allgemeinen Formel I bedeutet A vorzugsweise Methyl, Ethyl, n-Propyl, i-Propyl, n-Butyl, n-Pentyl und n-Hexyl; ganz besonders bevorzugt ist Methyl.

B steht in der allgemeinen Formel I bevorzugt für Cyan.

Ganz besonders bevorzugt sind Farbstoffe der Formel I, in denen R Isopropyl, A Methyl, B Cyan und die Seitenkette am Pyridon-Stickstoff Alkoxypropyl mit 2 - 4 C-Atomen im Alkoxyrest bedeuten.

Die erfindungsgemäßen Farbstoffe werden durch Diazotieren eines Amins der allgemeinen Formel II

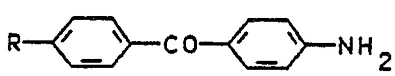

(II)

und anschließendes Kuppeln auf ein Pyridon der allgemeinen Formel III

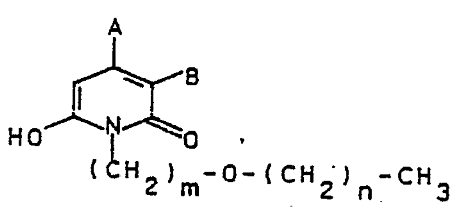

(III)

hergestellt R, A, B, m und n haben dabei die oben angegebenen Bedeutungen.

Die Herstellung der Amine der allgemeinen Formel II ist in DE-OS 31 20 747 und DE-OS 31 25 159 beschrieben.

Geeignete Amine der Formel II sind beispielsweise: 4-Methyl-4′-amino-benzophenon, 4-Ethyl-4′-amino-benzophenon, 4-n-Propyl-4′-amino-benzophenon, 4-i-Propyl-4′-amino-benzophenon, 4-n-Butyl-4′-amino-benzophenon, 4-i-Butyl-4′-amino-benzophenon, 4-sek.Butyl-4′-amino-benzophenon, 4-tert.-Butyl-4′-amino-ben-

Tabelle 1

| Farbstoff | Sublimierechtheit | Lichtechtheit |
|---|---|---|
| gemäß Beispiel 1 | 4 - 5 | 4 |
| gemäß Beispiel 2 | 4 - 5 | 4 |
| CI-Solvent Yellow 16 | 2 - 3 | 3 |
| CI-Solvent Yellow 98 | 5 | 2 |

Die Sublimierechtheit wurde hierbei folgendermaßen bestimmt:
0,5 g Farbstoff wurden 2 h in einer Porzellanschale auf dem Wasserbad bei 98 °C erwärmt. Mit Hilfe eines über die Schale gelegten Filterpapieres (Abstand ca. 3 cm) wurde die Menge des sublimierten Farbstoffs visuell bestimmt:
1 = sublimiert sehr stark
2 = sublimiert stark
3 = sublimiert etwas
4 = sublimiert eine Spur
5 = sublimiert nicht

Die Lichtechtheiten wurden in einer mit 1 % Farbstoff gefärbten Wachsmischung aus handelsüblichen Säure- und Esterwachsen nach DIN 54 004 gemessen. In der dabei benutzten Vergleichsskala bedeutet die Note 1 eine sehr geringe Lichtechtheit.

Die erfindungsgemäßen Farbstoffe eignen sich ferner sehr gut zum Einfärben von Kunststoffmassen, wie Polystyrol und davon abgeleitete Kunststoffe (Styrol-Butadien-, Styrol-Acrylnitril- und Acrylnitril-Butadien-Styrol-Copolymere), Celluloseacetat und Polymethylmethacrylat. Die Farbstoffe zeichnen sich auch hier durch gute Lichtechtheiten, hohe Hitzebeständigkeit und Farbstärke aus.

Tabelle 2 zeigt die Überlegenheit erfindungsgemäßer Farbstoffe im Vergleich zu üblichen Handelsprodukten.

Tabelle 2

| Farbstoff | Hitzebeständigkeit | rel.Farbstärke (%) | Lichtechtheit |
|---|---|---|---|
| gemäß Beispiel 1 | 300 °C | 100 | 5 |
| gemäß Beispiel 2 | 290 °C | 121 | 5 |
| CI-Solvent Yellow 16 | 250 °C | 32 | 3 |
| CI-Disperse Yellow 64 | 300 °C | 91 | 8 |

Zur Prüfung der Hitzebeständigkeit nach DIN 53772 wurde die Temperatur einer Polystyrol-Ausfärbung beginnend bei 200 °C Massetemperatur in 20 °C-Intervallen bis auf 300 °C gesteigert, wobei die jeweilige Verweilzeit 5 Minuten betrug. Angegeben wurde die Temperatur, bei der die Verfärbung dem Farbabstand $AE_{ab} = 3$ nach DIN 6174 entspricht.

Die Prüfung der Farbstärke erfolgt in einer Polystyrol-Ausfärbung nach DIN 53 235, wobei dem Farbstoff gemäß Beispiel 1 eine relative Farbstärke von 100 % zugeordnet wurde.

Die Bestimmung der Lichtechtheit erfolgt in einer Polystyrol-Ausfärbung nach DIN 54 004. In der dabei benutzten Vergleichsskala bedeutet die Note 1 eine sehr geringe Lichtechtheit.

Die erfindungsgemäßen Farbstoffe eignen sich auch sehr gut zum Färben und Bedrucken von Gebilden aus synthetischen Materialien, wie beispielsweise Polyacrylnitril, Polyamid, Cellulose-2 1/2-acetat, Cellulosetriacetat und insbesondere Polyestermaterialien, z.B. Polyethylenglykolterephthalat. Sie liefern nach den üblichen Färbe- und Druckverfahren farbstarke klare, gelbe bis orange Färbungen und Drucke mit sehr guten Echtheiten, insbesondere sehr gute Licht- und Trockenhitzeplissier- und Trockenhitzefixierechtheit.

Das Färben der genannten Materialien erfolgt zweckmäßig aus wäßriger Dispersion in Gegenwart von Carriern zwischen etwa 80 °C und 110 °C, in Abwesenheit von Carriern zwischen 110 °C bis 140 °C, sowie nach dem sogenannten Thermofixierverfahren bei etwa 170 °C bis 230 °C. Das Bedrucken kann so durchgeführt werden, daß die bedruckte Ware in Gegenwart eines Carriers bei Temperaturen zwischen etwa 80 °C und 100 °C oder auch in Abwesenheit eines Carriers bei etwa 110 °C bis 140 °C gedämpft oder auch nach dem Thermofixierverfahren bei etwa 170 °C bis 230 °C behandelt wird.

zophenon, 4-n-Pentyl-4′-amino-benzophenon, 4-n-Hexyl-4′-amino-benzophenon.

Die Kupplungskomponenten der allgemeinen Formel III lassen sich nach bekannten Verfahren herstellen, insbesondere durch Kondensation von Essigsäureestern der allgemeinen Formel IV mit Acylessigestern der allgemeinen Formel V und Aminen der allgemeinen Formel VI

$B-CH_2-COO-X$ (IV)    $A-CO-CH_2-COO-X$ (V)    $H_2N-(CH_2)_m-O-(CH_2)_n-CH_3$ (VI)

worin

X Alkyl mit 1 bis 4 C-Atomen bedeutet und

m, n, A und B die oben angegebenen Bedeutungen besitzen (Bobitt und Scola, J. Org. Chem. 25, 560 (1960)). Man kann auch zunächst den Ester der allgemeinen Formel IV mit dem Amin der allgemeinen Formel VI zu dem Amid der allgemeinen Formel VII

$B-CH_2-CO-NH-(CH_2)_m-O-(CH_2)_n-CH_3$ (VII)

und dieses mit dem Acylessigester der allgemeinen Formel V oder zunächst den Acylessigester der allgemeinen Formel V mit dem Amin der allgemeinen Formel VI zu dem Acylacetamid der allgemeinen Formel VIII

$A-CO-CH_2-CO-NH-(CH_2)_m-O-(CH_2)-_n-CH_3$ (VIII)

und dieses mit dem Ester der allgemeinen Formel IV umsetzen.

Geeignete Kupplungskomponenten der Formel V sind beispielsweise: 1-(3′-Ethoxy-ethyl)-3-cyan-4-methyl-6-oxy-2-pyridon, 1-(3′-n-Propoxy-ethyl)-3-cyan-4-methyl-6-oxy-2-pyridon, 1-(3′-n-Butoxy-ethyl)-3-cyan-4-methyl-6-oxy-2-pyridon, 1-(3′-n-Pentoxy-ethyl)-3-cyan-4-methyl-6-oxy-2-pyridon, 1-(3′-n-Hexoxy-ethyl)-3-cyan-4-methyl-6-oxy-2-pyridon, 1-(3′-Ethoxy-n-propyl)-3-cyan-4-methyl-6-oxy-2-pyridon, 1-(3′-n-Propoxy-n-propyl)-3-cyan-4-methyl-6-oxy-2-pyridon, 1-(3′-n-Butoxy-n-propyl)-3-cyan-4-methyl-6-oxy-2-pyridon, 1-(3′-n-Pentoxy-n-Propyl)-3-cyan-4-methyl-6-oxy-2-pyridon, 1-(3′-n-Hexoxy-n-Propyl)-3-cyan-4-methyl-6-oxy-2-pyridon, 1-(3′-Ethoxy-n-butyl)-3-cyan-4-methyl-6-oxy-2-pyridon, 1-(3′-n-Propoxy-n-butyl)-3-cyan-4-methyl-6-oxy-2-pyridon, 1-(3′-n-Butoxy-n-butyl)-3-cyan-4-methyl-6-oxy-2-Pyridon, 1-(3′-n-Pentoxy-n-butyl)-3-cyan-4-methyl-6-oxy-2-pyridon, 1-(3′-n-Hexoxy-n-butyl)-3-cyan-4-methyl-6-oxy-2-pyridon, 1-(3′-Ethoxy-n-pentyl)-3-cyan-4-methyl-6-oxy-2-pyridon, 1-(3′-n-Propoxy-n-pentyl)-3-cyan-4-methyl-6-oxy-2-pyridon, 1-(3′-n-Butoxy-n-pentyl)-3-cyan-4-methyl-6-oxy-2-pyridon, 1-(3′-n-Pentoxy-n-pentyl)-3-cyan-4-methyl-6-oxy-2-pyridon, 1-(3′-n-Hexoxy-n-pentyl)-3-cyan-4-methyl-6-oxy-2-pyridon, 1-(3′-n-Ethoxy-n-hexyl)-3-cyan-4-methyl-6-oxy-2-pyridon, 1 (3′-n-Propoxy-n-hexyl)-3-cyan-4-methyl-6-oxy-2-pyridon, 1-(3′-n-Butoxy-n-hexyl)-3-cyan-4-methyl-6-oxy-2-pyridon, 1-(3′-Pentoxy-n-hexyl)-3-cyan-4-methyl-6-oxy-2-pyridon, 1-(3′-n-Hexoxy-n-hexyl)-3-cyan-4-methyl-6-oxy-2-pyridon.

Die erfindungsgemäßen Farbstoffe eignen sich zum Einfärben von unpolaren Medien wie Öle, Lacke, Fette und besonders zum Einfärben von unpolaren Medien auf Wachs- bzw. Wachsmischungsbasis für moderne Drucktechniken, wie Hot Melt Ink Jet oder verschiedene Thermodruckverfahren, wie Thermotransfer- oder Thermosublimationsdruck. Als Wachsmischungen kommen auch Systeme, wie Harze mit Hydroxylgruppen und geringer Säurezahl (siehe europäische Patentanmeldung 0 206 286), in Frage.

Diese Verfahren erfordern hinsichtlich der Eigenschaften der eingesetzten Farbstoffe neben deren coloristischen Eignung ein hohes Maß an Temperaturstabilität, gute Sublimierechtheiten sowie gute Lichtechtheiten. Alle diese Eigenschaften werden von den erfindungsgemäßen Farbstoffen in vorbildlicher Weise erfüllt.

Tabelle 1 zeigt die Prüfergebnisse mit erfindungsgemäßen Farbstoffen im Vergleich zu im Handel befindlichen Fettfarbstoffen.

Im folgenden bedeuten Teile Gewichtsteile.

Beispiel 1

a) Farbstoff gemäß Formel IX

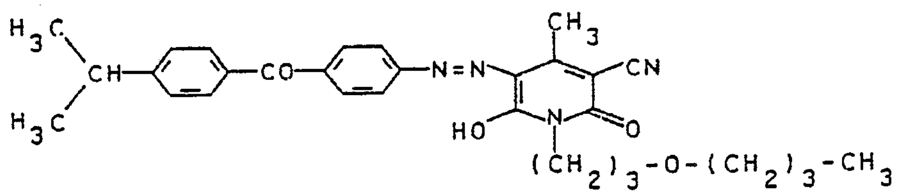

(IX)

Es werden 134 Teile Wasser von 90 °C vorgelegt und 23,9 Teile 4-Amino-4′-isopropyl-benzophenon (erhalten aus dem 4-Nitro-4′-isopropyl-benzophenon (DE-OS 31 20 747) durch Eisenreduktion) eingetragen und 90 Teile konz. Salzsäure zugegeben.

Man fügt 100 Teile Eis zu, diazotiert bei 0 bis 5 °C mit 7,6 Teilen Natriumnitrit und filtriert über 0,5 Teile Kieselgur ab.

26 Teile der unter Beispiel 1 b) hergestellten Kupplungskomponente gibt man zu 150 Teilen 70 °C warmen Wassers, fügt 21,9 Teile einer Lösung von 27%iger NaOH in Wasser zu und kühlt auf 40 °C ab.

In die Lösung gibt man die filtrierte Diazolösung, läßt auskuppeln und filtriert den Farbstoff ab. Man erhält nach dem Trocknen 44,4 Teile eines gelben Farbstoffs der Formel II mit einem Schmelzpunkt von 110 bis 116 °C und einer Absorptionsbande bei 436 nm (in Phthalsäurediethylester).

b) 1-γ-Butoxy-propyl-2-hydroxy-3-cyan-4-methyl-pyridon

In einen Autoklaven gibt man 27 Teile Cyanessigsäureethylester und fügt 32,8 Teile γ-n-Butoxy-n-propylamin zu, wobei die Temperatur auf 65 °C ansteigt. Dann wird in 1 h auf 105 °C geheizt und 2,5 h bei 105 °C gerührt und dabei das entstandene Ethanol abdestilliert.

Man kühlt auf 35 °C, gibt 26 Teile Acetessigsäureethylester und dann 13,9 Teile einer 65%igen wäßrigen Ethylaminlösung zu, schließt den Autoklaven, heizt auf 50 °C und rührt 5 h bei 50 °C. Man kühlt auf 35 °C ab, gibt 16 Teile einer 65%igen wäßrigen Ethylaminlösung zu, heizt in 1 h auf 90 bis 95 °C und rührt 20 Stunden bei 90 bis 95 °C.

Dann wird auf 20 °C abgekühlt, in 10 min in 113 Teile konz. Salzsäure gegeben, auf 0 °C abgekühlt und das Produkt abfiltriert.

Man erhält nach dem Trocknen 46 Teile des Produktes in Form weißer Kristalle mit einem Schmelzpunkt von 170 bis 173 °C

Beispiel 2

a) Farbstoff gemäß Formel X

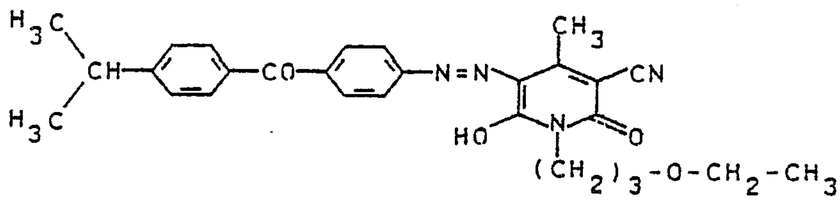

(X)

Es werden 23,9 Teile 4-Amino-4′-isopropyl-benzophenon, wie in Beispiel 1 a) angegeben, diazotiert und auf 23,6 Teile 1-γ-Ethoxy-n-propyl-2-hydroxy-3-cyan-4-methyl-pyridon gekuppelt.

Man erhält nach dem Filtrieren und Trocknen 39,4 Teile eines gelben Farbstoffs der Formel III mit einem Schmelzpunkt von 144 bis 148° C und einer Absorptionsbande von 436 nm (in Phthalsäurediethylester).

b) 1-γ-Ethoxy-n-propyl-2-hydroxy-3-cyan-4-methyl-pyridon

Verfährt man wie in Beispiel 1 a) angegeben, ersetzt aber das n-γ-Butoxy-n-propylamin durch 20,6 Teile γ-Ethoxy-n-propylamin, so erhält man 41,6 Teile von 1-γ-Ethoxy-n-propyl-2-hydroxy-3-cyan-4-methyl-pyridon in Form weißer Kristalle mit einem Schmelzpunkt von 190 bis 193° C.

## Ansprüche

1. Pyridonfarbstoffe der allgemeinen Formel I

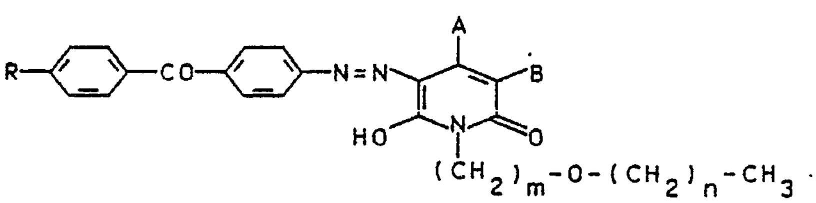

(I)

worin

m 2, 3 oder 4
n 1, 2, 3, 4 oder 5,
R ein geradkettiges oder verzweigtes Alkyl mit 1 bis 6 C-Atomen,
A Wasserstoff, Alkyl mit 1 bis 6 C-Atomen oder Phenyl und
B Wasserstoff, Cyan oder Aminocarbonyl bedeuten.

2. Farbstoffe gemäß Anspruch 1, dadurch gekennzeichnet, daß R Isopropyl, A Methyl, B Cyan und die Seitenkette am Pyridon-Stickstoff Alkoxypropyl mit 2 bis 4 C-Atomen im Alkoxyrest bedeuten.

3. Farbstoff der Formel IX

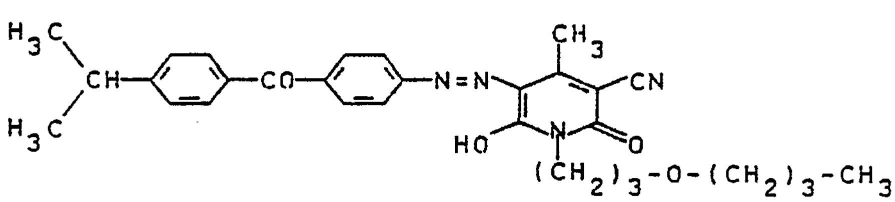

(IX)

4. Farbstoff der Formel X

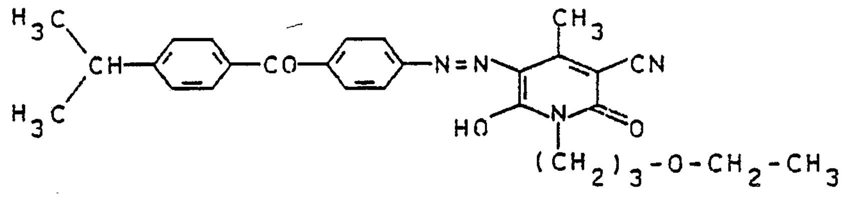

(X)

5. Verfahren zur Herstellung eines Farbstoffs der allgemeinen Formel I, dadurch gekennzeichnet, daß ein Amin der allgemeinen Formel II

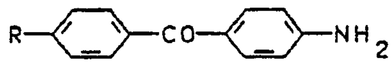

(II)

in üblicher Weise diazotiert und anschließend auf eine Kupplungskomponente der allgemeinen Formel III

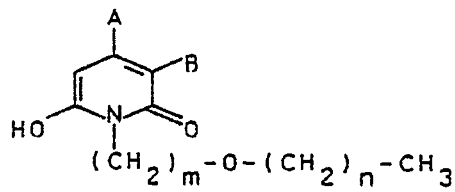

(III)

gekuppelt wird.

6. Verwendung von Farbstoffen der allgemeinen Formel I zum Färben und Bedrucken von unpolaren Medien.

7. Verwendung von Farbstoffen der allgemeinen Formel I gemäß Anspruch 6, dadurch gekennzeichnet, daß als unpolare Medien Öle, Lacke, Fette, Ink Jet-Tinten und Thermodruckbeschichtungen auf Wachs- bzw. Wachsmischungsbasis eingesetzt werden.

8. Verwendung von Farbstoffen der allgemeinen Formel I gemäß Anspruch 6, dadurch gekennzeichnet, daß als unpolare Medien Kunststoffmassen, wie Polystyrol und davon abgeleitete Kunststoffe, Celluloseacetat und Polymethylmethacrylat eingesetzt werden.

9. Verwendung von Farbstoffen der allgemeinen Formel I gemäß Anspruch 6, dadurch gekennzeichnet, daß als unpolare Medien synthetische Fasermaterialien, insbesondere Polyester, und Gemische solcher Materialien mit Cellulose eingesetzt werden.

Patentansprüche für den folgenden Vertragsstaat: ES

1. Verfahren zur Herstellung eines Pyridinfarbstoffs der allgemeinen Formel I

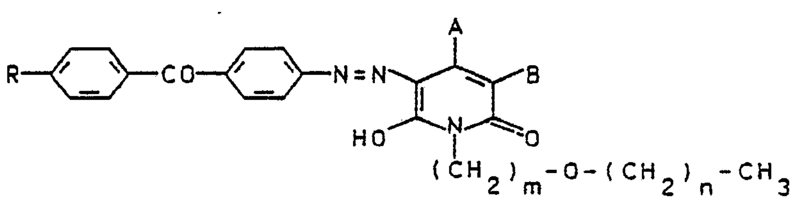

(I)

worin

m 2, 3 oder 4

n 1, 2, 3, 4 oder 5,

R ein geradkettiges oder verzweigtes Alkyl mit 1 bis 6 C-Atomen,

A Wasserstoff, Alkyl mit 1 bis 6 C-Atomen oder Phenyl und

B Wasserstoff, Cyan oder Aminocarbonyl

bedeuten, dadurch gekennzeichnet, daß ein Amin der allgemeinen Formel II

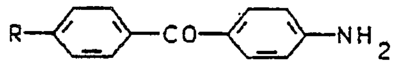

(II)

in üblicher Weise diazotiert und anschließend auf eine Kupplungskomponente der allgemeinen Formel III

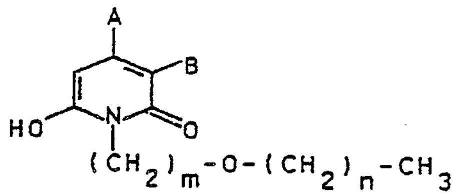

(III)

gekuppelt wird.

2. Verfahren gemäß Anspruch 1, dadurch gekennzeichnet, daß R Isopropyl, A Methyl, B Cyan und die Seitenkette am Pyridon-Stickstoff Alkoxypropyl mit 2 bis 4 C-Atomen im Alkoxyrest bedeuten.

3. Verfahren gemäß Anspruch 1 und/oder 2, dadurch gekennzeichnet, daß der Pyridonfarbstoff der allgemeinen Formel I die Formel IX hat

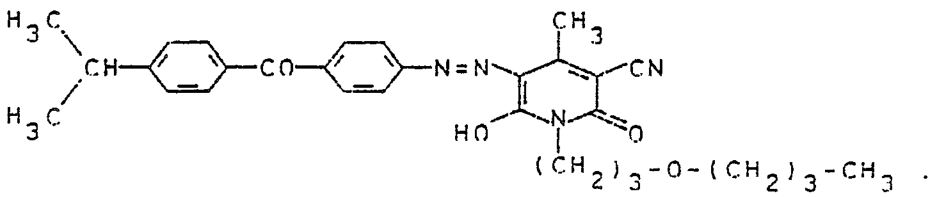

(IX)

4. Verfahren gemäß Anspruch 1 und/oder 2, dadurch gekennzeichnet, daß der Pyridonfarbstoff der allgemeinen Formel I die Formel X hat

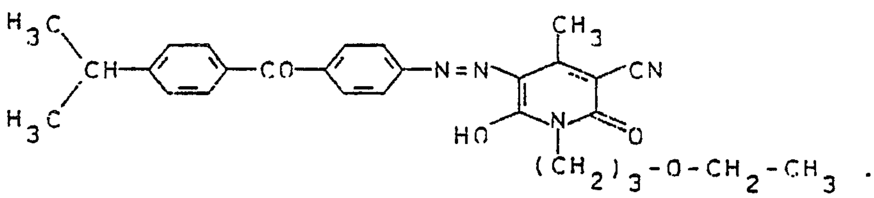

(X)

5. Verwendung von Farbstoffen der allgemeinen Formel I zum Färben und Bedrucken von unpolaren Medien.

6. Verwendung von Farbstoffen der allgemeinen Formel I gemäß Anspruch 5, dadurch gekennzeichnet, daß als unpolare Medien Öle, Lacke, Fette, Ink Jet-Tinten und Thermodruckbeschichtungen auf Wachs- bzw. Wachsmischungsbasis eingesetzt werden.

7. Verwendung von Farbstoffen der allgemeinen Formel I gemäß Anspruch 5, dadurch gekennzeichnet, daß als unpolare Medien Kunststoffmassen, wie Polystyrol und davon abgeleitete Kunststoffe, Celluloseacetat und Polymethylmethacrylat eingesetzt werden.

8. Verwendung von Farbstoffen der allgemeinen Formel I gemäß Anspruch 5, dadurch gekennzeichnet, daß als unpolare Medien synthetische Fasermaaterialien, insbesondere Polyester, und Gemische solcher Materialien mit Cellulose eingesetzt werden.

Europäisches Patentamt

# EUROPÄISCHER RECHERCHENBERICHT

Nummer der Anmeldung

EP 88 11 2279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 066 153 (CASSELLA)<br>* Seite 5, Formel IV; Seite 6, Zeilen 8,9 * & DE-A-3 120 747 (Kat. D)<br>--- | 1-5 | C 09 B 29/42<br>D 06 P 1/18 |
| A | EP-A-0 040 582 (CIBA-GEIGY)<br>* Ansprüche 1,2,15,16 *<br>----- | 1-5,9 | |
| | | | **RECHERCHIERTE SACHGEBIETE (Int. Cl.4)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 11-10-1988 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)